Europäisches Patentamt

European Patent Office

Office européen des brevets

(11) Publication number: **0 098 050**
**B1**

(12) **EUROPEAN PATENT SPECIFICATION**

(45) Date of publication of patent specification: **22.04.87**

(21) Application number: **83303110.7**

(22) Date of filing: **31.05.83**

(51) Int. Cl.⁴: **B 60 J 3/02**

(54) **Visor assembly.**

(30) Priority: **25.06.82 US 392240**

(43) Date of publication of application:
**11.01.84 Bulletin 84/02**

(45) Publication of the grant of the patent:
**22.04.87 Bulletin 87/17**

(84) Designated Contracting States:
**DE FR GB IT**

(56) References cited:
**EP-A-0 058 294**
**DE-B-1 140 475**
**US-A-1 684 418**

(73) Proprietor: **PRINCE CORPORATION**
**Windcrest Drive**
**Holland Michigan 49423 (US)**

(72) Inventor: **Marcus, Konrad Hugh**
**1162 Waukazoo Drive**
**Holland Michigan (US)**
Inventor: **Fleming, Dennis Joseph**
**617 State Street**
**Holland Michigan (US)**

(74) Representative: **Robinson, Anthony John**
**Metcalf et al**
**Kilburn & Strode 30 John Street**
**London, WC1N 2DD (GB)**

Courier Press, Leamington Spa, England.

## Description

The present invention relates to visor assemblies suitable for a vehicle and particularly visors adapted for use with the side windows of vehicles.

Conventional visors currently used in vehicles, such as automobiles, typically pivot about a generally vertical axis for movement from the windshield position to a side window position for use in blocking sunlight entering the vehicle from a side. Such movement of the visor during operation of the automobile by the driver, necessitated by a change in vehicle direction with respect to incoming sunlight, can be somewhat hazardous inasmuch as frequently it is necessary to duck under the visor as it is pivoted from the forward windshield position to the side window position. Additionally, with sliding visors of the type disclosed in US—A—2,289,644 which slide down from the headliner of a vehicle, such visors cannot be employed for shielding sunlight from the side window area. With sliding visors of the type represented by US—A—2,559,471, the operation of the visor which is guided within an edge track can be extremely troublesome since frequently they will stick and be difficult to operate since they do not slide smoothly between a raised stored and a lowered use position.

One prior art visor, shown in US—A—1,684,418, has features as set out in the precharacterising portion of claim 1. According to the present invention, a visor assembly for a vehicle is characterised in that the panel is movable between a raised stored position and the use position, that each of the arms has a length less than the height of the visor panel, that each of the arms has another end which is pivotally secured to the visor panel at spaced locations thereon above the verticle centreline of the panel and that cover means are provided which conceal the visor panel and the arms when in the stored position.

Preferably the cover means comprises a cover panel positioned to cover the support member and visor panel and comprising an opening along an edge thereof for permitting the visor to extend therethrough. Conveniently a handle may be provided the handle extending outwardly from the visor panel and a recess formed in the cover panel to nestably receive the handle when the visor panel is in a stored position, the handle facilitating movement of the visor between the stored and lowered use positions. The securing means preferably comprises a support member to which the opposite ends of the arms are pivotally secured, the securing means shaped to conform to a vehicle above a window.

In a preferred embodiment the assembly comprises a second visor panel and parallel spaced legs pivotally mounting the second panel to a second support member and wherein the cover extends over both of the visor panels to define a module containing two spaced visor panels. The cover, the visor panel and the support members are preferably shaped to fit along the side of a vehicle above the side windows thereof. The visor panel or panels can be formed as part of a module which can be snap-fitted to the vehicle roof.

The invention may be put into practice in various ways but one visor assembly embodying the invention will now be described with reference to the accompanying drawings, in which:

Figure 1 is a fragmentary perspective view of a vehicle embodying a visor assembly;

Figure 2 is an enlarged side elevational view of a visor assembly shown with the visor in the lowered use position;

Figure 3 is a side elevational view of the visor assembly in Figure 2 showing the visor in an elevated stored position; and

Figure 4 is a cross-sectional view taken along section line IV—IV of Figure 1.

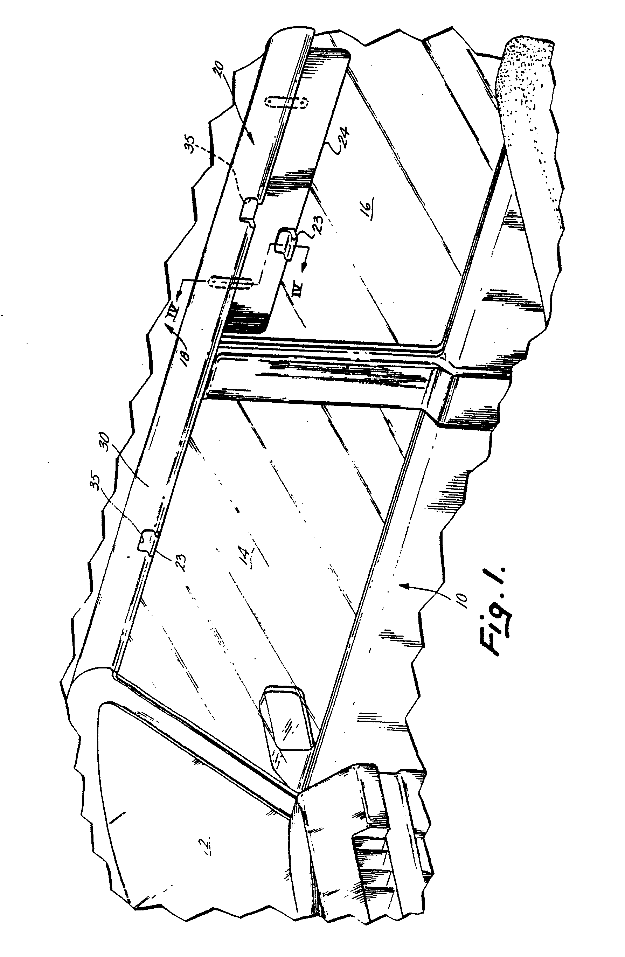

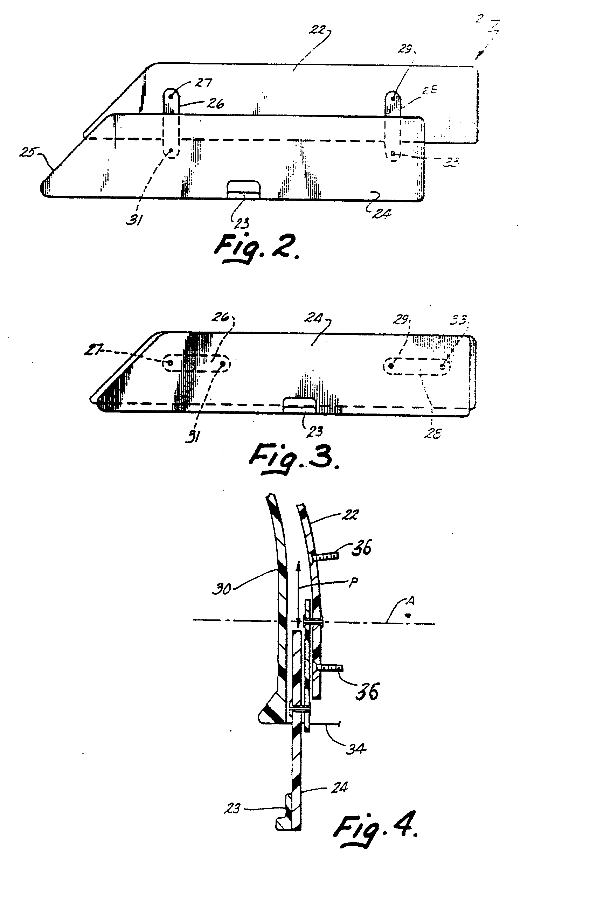

Referring initially to Figure 1, there is shown the right front interior of a vehicle 10 which includes a windshield 12, a right seat front passenger side window 14 and a rear seat right passenger side window 16. Extending above the window is the ceiling or headliner area 18 of the vehicle which typically is upholstered with a fabric conforming to the vehicle's general interior decor. The headliner frequently will include a snap-in upholstered panel conventionally secured to the sheetmetal roof of the vehicle by means of conventional mounting structure adapted to receive snap fasteners, screws or the like. Extending along the lower edge of the headliner just above the passenger windows 14 and 16 is an integral visor assembly module 20 incorporating a pair of downwardly pivoted visor assemblies 21 embodying the present invention and shown in greater detail in Figures 2 to 4. In Figure 1, the forward visor assembly is shown in its stored position concealed within the module 20 and therefore, the headliner of the vehicle with the rear seat visor assembly being shown in the lowered in use position. The construction and operation of each of the visor assemblies contained in module 20 is now described in connection with Figures 2 to 4.

Referring initially to Figures 2 and 3 which illustrate the visor assembly employed in the front side window area of module 20, a fixed support member 22 is provided and has a generally trapezoidal planar shape, and is slightly curved in cross-section (Figure 4). Its shape will vary as desired to conform to the headliner area above the side window as necessary for a given vehicle. Pivotally coupled to the fixed support member 22 is a visor panel 24 which can be opaque, translucent or transparent of a tinted material typically a polymeric material such as an acrylate and having a thickness of about 3.175 mm (0.125 inches). The visor panel 24 is also trapezoidal shape having a tapered leading edge 25 corresponding to the angle of the leading edge of the window 14 near the top as seen in Figure 1 to cover this triangular area of the window.

The visor panel 24 is pivotally coupled to the support member 22 by means of a pair of spaced parallel legs 26 and 28 each having one end 27 and 29, respectively, pivotally mounted to the fixed member 22 and an opposite end 31 and 33, respectively, pivotally coupled to the visor panel 24 as shown. The legs 26 and 28 are made of a thin resilient material and in the preferred embodiment were made of acrylonitrite-butadiene-styrene (ABS) resins having a thickness of about 1.524 mm (0.060 inches). The members 22, 24, 26 and 28 form a parallelogram providing substantially uniform translating motion of the visor panel 24 with respect to the fixed member 22 between the lowered position shown in Figure 2 in which the legs 26 and 28 are substantially vertical and a stored position in which the legs pivot in a counterclockwise direction to a substantially horizontal position to elevate the visor to a stored position. The rear seat visor assembly 21 includes a visor panel which may be of a different shape from the panel 24 shown in Figure 2 and in the embodiment shown, is a generally rectangular panel, as seen in Figure 1.

In the preferred embodiment of the invention, the support member 22, as best seen in Figure 4, is slightly curved to conform to the roof line of the vehicle and is secured to mounting nuts (not shown) welded or otherwise suitably attached to the sheetmetal roof of the vehicle by fastening means 36 such as screws, although snap fasteners also may be used. The pivot connections 27 and 31 can be provided by rivets extending through apertures formed in the leg 26 and the support member 22 and the visor panel 24 respectively, as best seen in Figure 4 and similarly for leg 28.

As seen in Figures 1 and 4, a decorative exterior panel 30 of integral construction and upholstered to match the upholstery of the vehicle extends from the forward part of the vehicle to cover the visor assemblies 21. The lower edge of the panel 30 includes a pair of slots 34 for receiving therein the visor panels 24 which preferably include a handle 23 facilitating the lowering of the visor from a stored position, to a lowered position, as illustrated in Figures 1, 2 and 3. The handle 23 is recessed within a notch 35 formed in the panel 30, as illustrated in Figure 1. As illustrated also in Figure 4, the panel 30 is curved to conform to the curvature of the vehicle headliner at the intersection of the headliner with the upper portion above the side windows and can be secured in a conventional manner, by for example, using snap fasteners coupling this panel to the vehicle roof. In some installations, it may be desirable to eliminate the support member 22 and employ in its place the decorative panel 30 as the support member.

The spacing between the various panels and legs is not critical, although generally a friction fit is desired so as to hold the visor 24 in any desired selected lowered position between the positions illustrated in Figures 2 and 3. The flexible legs 26 and 28 permit movement of the substantially flat visor panel 24 in the space between the curved panels 22 and 30. In the event the visor 24 is made of a transparent material, it may be desirable to include vertical strips of wear-resistant material along the opposite edges to provide an innerface frictional contact surface between the visor 24 and the panels 30 and 22 to serve as spacing members and prevent scratching of the transparent visor.

By providing a parallelogram-type innerconnection of the visor 24 to a support member, smooth operation can be achieved to provide an infinitely adjustable visor, particularly suited for the side window of a vehicle. The visor moves downwardly and forwardly, as illustrated in Figures 1 to 3, in a plane P (Figure 4) generally orthogonally related to the pivot axes A of the arms 26 and 28.

The movement from the stored position to the in use position of the front visor covers the front triangular corner of the front side window. The cover 30 can be integrally secured to the supports 22 of one or both side window visors to provide an integral single or double visor module for assembly in a vehicle. Such visor construction can be relatively inexpensive to manufacture and install and provides effective sun shading.

**Claims**

1. A visor assembly (21) for a vehicle (10) comprising: a visor panel (24); at least a pair of substantially parallel arms (26, 28) spaced from one another; means for pivotally securing one end (27, 29) of each arm to a vehicle to permit pivotal movement, from a lowered use position, of the visor panel in a plane (P) generally orthogonal to the pivot axes (A) of the arms and parallel with the arms; characterised in that the panel is movable between a raised stored position and the use position, that each of the arms (26, 28) has a length less than the height of the visor panel (24), that each of the arms has another end (31, 33), which is pivotally secured to the visor panel at spaced locations thereon above the vertical centreline of the panel, and that cover means (30) are provided which conceal the visor panel and the arms when in the stored position.

2. A visor assembly as claimed in Claim 1 in which the cover means comprises a cover panel (30) positioned to cover the support member and visor panel and comprising an opening along an edge thereof for permitting the visor to extend therethrough.

3. A visor assembly as claimed in Claim 2 comprising a handle (23) extending outwardly from the visor panel and a recess (35) formed in the cover panel to nestably receive the handle when the visor panel is in a stored position, the handle facilitating movement of the visor between the stored and lowered use positions.

4. A visor assembly as claimed in any one of the preceding claims in which the securing means comprises a support member to which the said one ends of the arms are pivotally secured, the securing means shaped to conform to a vehicle above a window.

5. A visor assembly as claimed in any one of the preceding claims comprising a second visor panel and parallel spaced legs pivotally mounting the second panel to a second support member and wherein the cover extends over both of the visor panels to define a module containing two spaced visor panels.

6. An assembly as claimed in any one of the preceding claims in which the cover (30), the visor panel (24) and the support members (22) are shaped to fit along the side of a vehicle above the side windows thereof.

**Patentansprüche**

1. Sonnenblendschutzvorrichtung (21) für ein Fahrzeug (10), mit einer Sonnenblende (24), wenigstens einem Paar mit Zwischenabstand zumindest annähernd paralleler Arme (26, 28), einer Befestigungsvorrichtung zur schwenkbaren Lagerung eines Endes (27, 29) jedes Arms an einem Fahrzeug, um eine Schwenkbewegung der Sonnenblende aus einer unteren Betriebsstellung in einer zu den Schwenkachsen (A) der Arme im wesentlichen rechtwinkligen und zu den Armen parallelen Ebene (P) zu ermöglichen, dadurch gekennzeichnet, daß die Sonnenblende zwischen einer oberen Ruhestellung und der Betriebsstellung bewegbar ist, daß jeder der Arme (26, 28) von einer Länge kleiner als die Höhe der Sonnenblende (24) ist, daß jeder der Arme ein anderes Ende (31, 33) aufweist, das an mit Zwischenabstand angeordneten Stellen der Sonnenblende über deren waagerechter Mittellinie schwenkbar gelagert ist, und daß eine Abdeckung (30) vorgesehen ist, welche die Sonnenblende und die Arme in der Ruhestellung verdeckt.

2. Sonnenblendschutzvorrichtung nach Anspruch 1, dadurch gekennzeichnet, daß die Abdeckung eine Abdeckplatte (30) umfaßt, die so angeordnet ist, daß sie den Träger und die Sonnenblende abdeckt, und an einem ihrer Ränder eine Öffnung aufweist, durch die hindurch die Sonnenblende ausziehbar ist.

3. Sonnenblendschutzvorrichtung nach Anspruch 2, dadurch gekennzeichnet, daß aus der Sonnenblende eine Handhabe (23) herausragt und in der Abdeckplatte eine Vertiefung (35) zur ineinandergreifenden Aufnahme der Handhabe in einer Ruhestellung der Sonnenblende ausgebildet ist, wobei die Handhabe das Bewegen der Sonnenblende zwischen der Ruhe- und der unteren Betriebsstellung vereinfacht.

4. Sonnenblendschutzvorrichtung nach einem der vorhergehenden Ansprüche, dadurch gekennzeichnet, daß die Befestigungsvorrichtung einen Träger umfaßt, an dem die genannten einen Enden der Arme schwenkbar gelagert sind, wobei die Befestigungsvorrichtung an die Form eines Fahrzeuges über einem Fenster angepaßt ist.

5. Sonnenblendschutzvorrichtung nach einem der vorhergehenden Ansprüche dadurch gekennzeichnet, daß sie eine zweite Sonnenblende und mit Zwischenabstand parallele Schenkel umfaßt, mit denen die zweite Sonnenblende an einem zweiten Träger schwenkbar gelagert ist, und daß sich die Abdeckung über beide Sonnenblenden erstreckt und einen Baustein bildet, der zwei mit Zwischenabstand angeordnete Sonnenblenden enthält.

6. Vorrichtung nach einem der vorhergehenden Ansprüche, dadurch gekennzeichnet, daß die Abdeckung (30), die Sonnenblende (24) und die Träger (22) von solcher Gestalt sind, daß sie an die Seite eines Fahrzeuges über dessen Seitenfenstern passen.

**Revendications**

1. Dispositif pare-soleil (21) pour un véhicule (10) comportant: un panneau pare-soleil (24); au moins une paire de bras sensiblement parallèles (26, 28) espacés l'un de l'autre; des moyens pour monter pivotante une extrémité (27, 29) de chaque bras sur un véhicule pour permettre un mouvement de pivotement, depuis une position abaissée de service, du panneau pare-soleil dans un plan (P) dans son ensemble orthogonal aux axes de pivotement (A) des bras et parallèle aux bras; caractérisé en ce que le panneau peut se déplacer entre une position relevée de rangement et la position de service; en ce que chacun des bras (26, 28) a une longueur inférieure à la hauteur du panneau pare-soleil (24); en ce que chacun des bras présente une autre extrémité (31, 33) qui est montée pivotante sur le panneau pare-soleil, en des emplacements espacés sur ce panneau, au-dessus de l'axe vertical du panneau; et en ce qu'il est prévu des moyens de recouvrement (30) qui cachent le panneau pare-soleil et les bras lorsqu'ils sont en position de rangement.

2. Dispositif pare-soleil selon la revendication 1 dans lequel les moyens de recouvrement comportent un panneau de recouvrement (30) placé pour recouvrir l'élément support et le panneau pare-soleil et comportant une ouverture le long de l'un de ses bords pour permettre au pare-soleil de s'étendre à travers lui.

3. Dispositif pare-soleil selon la revendication 2, comportant une poignée (23) qui s'étend vers lextérieur à partir du panneau pare-soleil ainsi qu'un renfoncement (35) formé dans le panneau de recouvrement pour recevoir, par emboîtement, la poignée lorsque le panneau pare-soleil est en position de rangement, la poignée facilitant le déplacement du pare-soleil entre sa position de rangement et sa position abaissée de service.

4. Dispositif pare-soleil selon l'une quelconque des revendications précédentes, dans lequelles moyens de montage comprennent un élément de support auquel les premières extrémités des bras sont montées pivotantes, les moyens de fixation étant conformés pour s'adapter à un véhicule au-dessus d'une vitre.

5. Dispositif pare-soleil selon l'une quelconque des revendications précédentes, comportant un second panneau pare-soleil et des pattes parallèles et espacées assurant le montage pivotant du second panneau sur un second élément de support et dans lequel le recouvrement s'étend sur l'un et l'autre des panneaux pare-soleil pour définir un module qui contient deux panneaux pare-soleil espacés.

6. Dispositif selon l'une quelconque des revendications précédentes, dans lequel le recouvrement (30), le panneau pare-soleil (24) et les éléments de support (22) sont conformés pour se loger le long d'un côté d'un véhicule, au-dessus de ses fenêtres latérales.

Fig. I.

0 098 050

*Fig. 2.*

*Fig. 3.*

*Fig. 4.*